# FASCICULE DE BREVET EUROPEEN

(11) **EP 3 814 893 B1**
(45) Date de publication et mention de la délivrance du brevet: **03.09.2025**
(21) Numéro de dépôt: 19737809.4
(22) Date de dépôt: 21.05.2019
(51) Int. Cl.: G06F 9/30, G06F 9/38, G06F 15/80

(54) **ACCÈS MÉMOIRE DE PROCESSEURS**
PROZESSORSPEICHERZUGRIFF
PROCESSOR MEMORY ACCESS

(30) Priorité: 29.06.2018 FR 1855998
(43) Date de publication de la demande: 05.05.2021
(73) Titulaire: Vsora, 92360 Meudon La Foret (FR)
(72) Inventeur: MAALEJ, Khaled, 75008 PARIS (FR); NGUYEN, Trung-Dung, 91300 MASSY (FR); SCHMITT, Julien, 91300 MASSY (FR); BERNARD, Pierre-Emmanuel, 92160 ANTONY (FR)
(74) Mandataire: Plasseraud IP
(86) Numéro de dépôt international: PCT/FR2019/051155
(87) Numéro de publication internationale: WO 2020/002782

(56) Documents cités:
- GB-A- 2 407 179
- US-A- 5 513 366
- US-A1- 2004 015 677

## Description

L'invention relève du domaine des processeurs et de leurs interactions avec les organes mémoire.

Classiquement, un dispositif informatique comprend un ensemble d'un ou plusieurs processeurs. Chaque processeur comprend une ou plusieurs unités de traitement, ou PU pour « *Processing Units* ». Chaque PU comprend un ou plusieurs organes de calcul appelés unités arithmétiques et logiques, ou ALU pour « *Arithmetic-Logic Unit* ». Pour disposer d'un dispositif informatique performant, c'est-à-dire rapide pour effectuer des opérations informatiques, il est classique de prévoir un nombre élevé d'ALU. Ainsi, les ALU peuvent traiter des opérations en parallèle, c'est-à-dire en même temps. L'unité de temps est alors un cycle de calcul. Il est donc commun de quantifier la puissance de calcul du dispositif informatique en nombre d'opérations qu'il est capable d'effectuer par cycle de calcul. US 5,513,366 et GB 2 407 179 traitent de ces sujets.

Néanmoins, disposer d'un nombre élevé d'ALU est insuffisant, voir inutile, si les éléments du dispositif interagissant avec les ALU ne sont pas agencés (dimensionnés) en adéquation avec le nombre d'ALU que l'on souhaite faire fonctionner simultanément. Autrement dit, si le nombre d'ALU est élevé, le critère limitant de la puissance du dispositif peut être la configuration de l'environnement des ALU. En particulier, le dispositif comprend un ensemble mémoire, comprenant lui-même un ou plusieurs organes mémoire, chacun disposant d'un nombre fixe d'emplacements mémoire sur lesquels des données informatiques peuvent être stockées durablement. Au cours des traitements informatiques, les ALU reçoivent en entrée des données issues des organes mémoires et fournissent en sortie des données qui sont, à leur tour, stockées sur les organes mémoires. On comprend alors que, outre le nombre d'ALU, le nombre d'organes mémoire est un autre critère déterminant de la puissance de calcul du dispositif.

Le routage des données entre les ALU et les organes mémoire, dans les deux sens, est assuré par un bus du dispositif. Le terme « bus » est utilisé ici dans son sens général de système (ou interface) de transfert de données incluant du matériel (circuit d'interface) et les protocoles régissant les échanges. Le bus transmet les données elles-mêmes, des adresses et des signaux de commande. Chaque bus présente, lui aussi, des limites matérielles et logicielles de sorte que le routage des données est limité. Notamment, le bus présente un nombre limité de ports côté organe mémoire et un nombre limité de ports côté ALUs. Dans le présent contexte, il est considéré que les organes mémoires sont mono-port, c'est-à-dire que les opérations de lecture et d'écriture sont mis en œuvre au cours de cycles différents, par opposition aux mémoires dites « double-port » (plus coûteuses en terme de surface et nécessitant des bus de commande dédoublés plus larges pour l'écriture et la lecture). Ainsi, au cours d'un cycle de calcul, un emplacement mémoire est accessible via le bus dans un unique sens (en « lecture » ou en « écriture »). En outre, au cours d'un cycle de calcul, un emplacement mémoire est accessible pour une unique ALU. En variante, les solutions techniques proposées peuvent être mises en œuvre avec des mémoires dites « double-port ». Dans de tels modes de réalisation, des lectures et écritures peuvent être mises en œuvre au cours d'un même cycle de calcul.

Entre le bus et les ALUs, un dispositif informatique comprend généralement un jeu de registres et d'organes mémoires locaux, qui peuvent être vus comme des mémoires distinctes des organes mémoires précités. Pour faciliter la compréhension, on distingue ici les « registres », destinés à stocker des données en tant que telles, et les « organes mémoires locaux », destinés à stocker des adresses mémoire. À chaque registre sont attribuées les ALUs d'une PU. Une PU se voit attribuée plusieurs registres. La capacité de stockage des registres est très limitée en comparaison des organes mémoire mais leur contenu est directement accessible aux ALUs.

Pour effectuer les calculs, chaque ALU doit généralement, dans un premier temps, obtenir les données d'entrée du calcul, typiquement les deux opérandes d'un calcul élémentaire. Une opération de « lecture » de l'emplacement mémoire correspondant via le bus pour importer chacun des deux opérandes sur un registre est donc mise en œuvre. Puis, l'ALU effectue l'opération de calcul en elle-même à partir des données d'un registre et en exportant le résultat sous forme d'une donnée sur un registre. Enfin, une opération d' « écriture » est mise en œuvre pour enregistrer, dans un emplacement mémoire, le résultat du calcul. Au cours d'une telle opération d'écriture, le résultat stocké sur le registre est enregistré dans un emplacement mémoire via le bus. Chacune des opérations consomme *a priori* un ou plusieurs cycles de calcul.

Dans les dispositifs informatiques connus, il est usuel d'essayer de faire exécuter plusieurs opérations (ou plusieurs instructions) au cours d'un même cycle de calcul, afin de réduire le nombre total de cycles de calcul et donc d'augmenter l'efficacité. On parle alors de « chaînes de traitement » ou « pipelines » parallèles. Cependant, il existe souvent de nombreuses dépendances des opérations les unes par rapport aux autres. Par exemple, il est impossible d'effectuer un calcul élémentaire tant que les opérandes n'ont pas été lus et qu'ils ne sont pas accessibles sur un registre pour l'ALU. Mettre en œuvre des chaînes de traitement implique donc de vérifier la dépendance des opérations (des instructions) les unes par rapport aux autres, ce qui est complexe et donc coûteux.

Usuellement, plusieurs opérations indépendantes sont mises en œuvre au cours d'un même cycle de calcul. Généralement, pour une ALU donnée et au cours d'un même cycle de calcul, il est possible d'effectuer une opération de calcul et une opération de lecture ou d'écriture. En revanche, pour une ALU donnée et au cours d'un même cycle de calcul, il est impossible d'effectuer à la fois une opération de lecture et une opération d'écriture (dans le cas d'organes mémoire mono-port). D'autre part, les accès mémoire (le bus) ne permettent pas d'effectuer, au cours d'un même cycle de calcul et pour un emplacement mémoire donné, des opérations de lecture ou d'écriture pour deux ALUs distinctes l'une de l'autre.

Pour s'assurer que chaque ALU est la plus active possible (sans cycle de calcul perdu), il est donc instinctif d'essayer d'atteindre une situation dans laquelle, à chaque cycle de calcul, trois emplacements mémoire sont accessibles pour chacune des ALU : deux destinés à alimenter en opérandes deux entrées de l'ALU (lecture) et un pour recevoir un résultat de calcul élémentaire de l'ALU (écriture). Ainsi, les deux opérations de lecture sont sélectionnées pour obtenir (stockés sur un registre) les opérandes nécessaires au calcul élémentaire à mettre en œuvre au cours du cycle de calcul suivant. Pour améliorer la puissance de calcul, il est donc instinctif de prévoir à la fois un nombre élevé d'ALU et un nombre proportionnel d'emplacements mémoire (par exemple au moins trois fois plus d'emplacements mémoire que d'ALU).

Cependant, l'augmentation du nombre d'ALUs et du nombre d'organes mémoire augmente la complexité des interactions entre ces deux types d'éléments. Augmenter le nombre d'ALUs du dispositif et d'organes mémoire aptes à y être connectés entraine une augmentation, non linéaire, de la complexité du bus. Augmenter le nombre d'ALUs et le nombre d'organes mémoire est donc complexe et coûteux.

La présente divulgation vient améliorer la situation.

Il est proposé un dispositif informatique comprenant :
- une pluralité d'unités arithmétiques et logiques ;
- un jeu de registres aptes à alimenter en données de type opérande les entrées desdites unités arithmétiques et logiques et aptes être alimentés en données issues des sorties desdites unités arithmétiques et logiques ;
- une mémoire ;
- une interface mémoire par l'intermédiaire de laquelle des données sont transmises et routées entre les registres et la mémoire ;
- une unité de commande configurée pour piloter les unités arithmétiques et logiques selon une microarchitecture en chaine de traitement de sorte que les unités arithmétiques et logiques effectuent des calculs en parallèle les unes des autres, l'unité de commande étant en outre agencée pour piloter les accès mémoire par l'intermédiaire de l'interface mémoire. Les pilotages génèrent :
- au moins un cycle i incluant à la fois la mise en œuvre d'au moins un premier calcul par une unité arithmétique et logique et le téléchargement, depuis la mémoire sur au moins un registre, d'un premier jeu de données ;
- au moins un cycle ii, ultérieur à l'au moins un cycle i, incluant la mise en œuvre d'un deuxième calcul par une unité arithmétique et logique, deuxième calcul pour lequel une partie au moins du premier jeu de données forme au moins un opérande.

Un tel dispositif permet de lire, en une unique opération, un ensemble de données sur un organe mémoire et de les stocker temporairement sur un registre. L'ensemble des données lues lors d'un cycle de calcul t peuvent ne pas être toutes utilisées au cours du cycle de calcul t+1 immédiatement ultérieur. Dans certains cas au moins, des données parmi celles lues sont inutiles au cours du cycle dudit calcul ultérieur t+1 mais sont utilisées au cours d'un cycle de calcul encore postérieur t+1+n sans qu'il soit nécessaire d'effectuer une opération supplémentaire de lecture et donc sans consommer un cycle de calcul supplémentaire.

Dans le domaine du traitement parallélisé de données par un dispositif informatique, l'approche usuelle est de planifier un accès mémoire dédié pour lire chacune des données nécessaires au prochain calcul élémentaire à mettre en œuvre et uniquement celles nécessaires au prochain calcul élémentaire. Cette approche usuelle pourrait être appelée « accès mémoire en flux tendu ». Dans une telle approche usuelle, il est considéré comme inutile de lire (et stocker sur un registre) une donnée qui n'est pas immédiatement nécessaire. Ainsi, chaque opération d'accès mémoire est chronologiquement antérieure au calcul élémentaire lui-même (impératif) mais planifié directement et uniquement en fonction du prochain calcul élémentaire. La demanderesse est allée à l'encontre des *a priori* du domaine en mettant en œuvre une approche différente.

La demanderesse propose ainsi une approche dans laquelle, à chaque opération de lecture, le nombre de données lues est supérieur au nombre de données strictement nécessaire pour la mise en œuvre du prochain calcul. Une telle approche pourrait, par opposition, être appelée « accès mémoire prévisionnel ». Il est alors possible qu'une donnée parmi les données lues soit utilisée pour un calcul futur, autre que le calcul mis en œuvre immédiatement après la lecture. Dans de tels cas, les données nécessaires ont été obtenues au cours d'une unique opération d'accès mémoire (avec augmentation de la bande passante de la mémoire) tandis que l'approche usuelle aurait nécessité au moins deux accès mémoire distincts. L'approche proposée par la demanderesse a donc pour effet, au moins dans certains cas, de réduire la consommation de cycles de calcul pour les accès mémoire et permet donc d'améliorer l'efficacité du dispositif. Sur le long terme (plusieurs cycles de calculs consécutifs) le nombre d'accès mémoire (en lecture et/ou en écriture) est réduit.

Cette approche n'exclut pas des pertes : certaines des données lues et mémorisées sur un registre peuvent être perdues (écrasées par d'autres données mémorisées ensuite sur le même registre) avant même d'avoir été utilisées dans un calcul. Néanmoins, sur un grand nombre de calculs et de cycles de calcul, la demanderesse a constaté une amélioration des performances, y compris en l'absence de sélection des ensembles de données lues. Autrement dit, même en l'absence de sélection des données lues (ou sélection aléatoire) cette approche permet statistiquement d'améliorer l'efficacité du dispositif informatique par rapport à l'approche habituelle.

Selon un autre aspect, il est proposé un procédé de traitement de données mis en œuvre par une unité de commande d'un dispositif informatique, ledit dispositif comprenant :
- une pluralité d'unités arithmétiques et logiques ;
- un jeu de registres aptes à alimenter en données de type opérande les entrées desdites unités arithmétiques et logiques et aptes être alimentés en données issues des sorties desdites unités arithmétiques et logiques ;
- une mémoire ;
- une interface mémoire par l'intermédiaire de laquelle des données sont transmises et routées entre les registres et la mémoire ;
- l'unité de commande configurée pour piloter les unités arithmétiques et logiques selon une microarchitecture en chaine de traitement de sorte que les unités arithmétiques et logiques effectuent des calculs en parallèle les unes des autres, l'unité de commande étant en outre agencée pour piloter les accès mémoire par l'intermédiaire de l'interface mémoire ;
Le procédé comprend au moins :
- générer un cycle i incluant à la fois la mise en œuvre d'au moins un premier calcul par une unité arithmétique et logique et le téléchargement, depuis la mémoire sur au moins un registre, d'un premier jeu de données ;
- générer un cycle ii, ultérieur au cycle i, incluant la mise en œuvre d'un deuxième calcul par une unité arithmétique et logique, deuxième calcul pour lequel une partie au moins du premier jeu de données forme au moins un opérande.

Selon un autre aspect, il est proposé un programme informatique, notamment de compilation, comportant des instructions pour la mise en œuvre de tout ou partie d'un procédé tel que défini dans les présentes lorsque ce programme est exécuté par un processeur. Selon un autre aspect, il est proposé un support d'enregistrement non transitoire, lisible par un ordinateur, sur lequel est enregistré un tel programme.

Les caractéristiques suivantes peuvent, optionnellement, être mises en œuvre. Elles peuvent être mises en œuvre indépendamment les unes des autres ou en combinaison les unes avec les autres :
- L'unité de commande est en outre configurée pour, préalablement au pilotage des unités arithmétiques et des accès mémoire, mettre en œuvre un algorithme d'identification du premier jeu de données à télécharger au cours de l'au moins un cycle i en fonction du deuxième calcul à mettre en œuvre au cours de l'au moins un cycle ii. Cela permet d'adapter les données lues en fonction des calculs à effectuer et donc d'améliorer la pertinence des données du premier jeu de données téléchargé.
- L'unité de commande est configurée pour mettre en œuvre deux cycles i distincts l'un de l'autre de sorte que deux premiers jeux de données distincts l'un de l'autre sont téléchargés sur au moins un registre, une partie au moins de chacun des deux premiers jeux de données formant un opérande du deuxième calcul de l'au moins un cycle ii. Cela permet, pendant lesdits au moins deux cycles, de cumuler les calculs et les accès mémoire. Ainsi, à l'issue des deux cycles i, l'ensemble des opérandes nécessaires pour les calculs suivants peuvent avoir été téléchargés.
- L'unité de commande est configurée pour mettre en œuvre une pluralité de cycles ii distincts les uns des autres, et de sorte que la partie du premier jeu de données formant au moins un opérande du deuxième calcul d'un cycle ii soit différente d'un cycle ii à un autre cycle ii de la pluralité. Cela permet de mettre en œuvre plusieurs calculs élémentaires pour un unique jeu de données téléchargé.
- L'unité de commande est configurée pour effectuer au moins deux itérations d'une série d'au moins un cycle i, et un cycle ii, lesdites deux itérations étant au moins en partie superposées de sorte qu'au moins un cycle ii de la première itération constitue un cycle i de l'itération suivante. Cela permet d'effectuer des calculs et des accès mémoire sur un nombre particulièrement restreint de cycles de calcul, et donc d'augmenter encore l'efficacité.
- L'unité de commande est configurée pour faire précéder un premier cycle i d'une phase d'initialisation incluant le téléchargement, depuis la mémoire sur au moins un registre, d'au moins un jeu de données formant opérandes pour le premier calcul dudit premier cycle i. Cela permet de d'initialiser le procédé pour ensuite répéter autant de fois que nécessaire les cycles i et ii pour chacun des jeux de données à traiter.
- L'unité de commande est en outre agencée pour piloter les accès mémoire par l'intermédiaire de l'interface mémoire de sorte que lesdits pilotages génèrent :
   - au cours d'un cycle i, la mise en œuvre d'une pluralité de premiers calculs par une pluralité d'unités arithmétiques et logiques ;
   - au cours d'un cycle ii, la mise en œuvre d'une pluralité de deuxièmes calculs par une pluralité d'unités arithmétiques et logiques,
le regroupement des données par jeu de données à télécharger étant sélectionné en correspondance avec une répartition des affectations des opérations de calcul à chacune des unités arithmétiques et logiques de la pluralité de sorte que lesdites unités arithmétiques et logiques présentent un fonctionnent de manière synchronisée, asynchrone ou mixte. Cela permet d'améliorer encore l'efficacité en adaptant le fonctionnement coordonné des ALU en fonction des traitements à effectuer et des ressources disponibles.

L'invention est définie dans les revendications indépendantes ci-jointes, auxquelles il convient de se référer. Les caractéristiques avantageuses sont énoncées dans les revendications dépendantes ci-jointes.

D'autres caractéristiques, détails et avantages de l'invention apparaîtront à la lecture de la description détaillée ci-après, et à l'analyse des dessins annexés, sur lesquels :
- la figure 1 montre une architecture d'un dispositif informatique selon l'invention ;
- la figure 2 est une représentation partielle d'une architecture d'un dispositif informatique selon l'invention ; et
- la figure 3 représente un exemple d'accès mémoire selon l'invention ; et
- la figure 4 est une variante de l'exemple de la figure 3.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

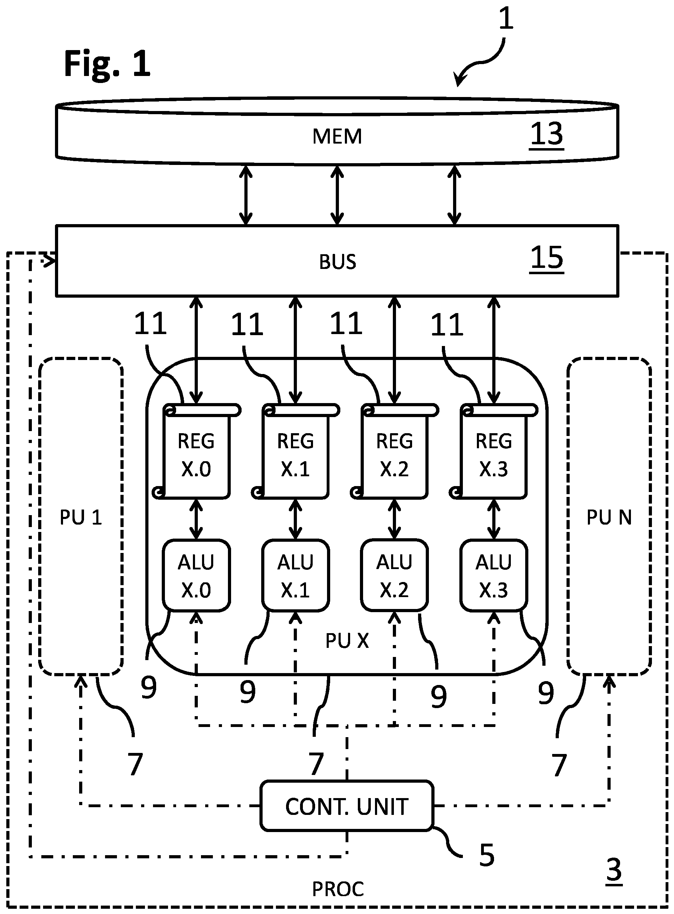

La figure 1 montre un exemple d'un dispositif 1 informatique. Le dispositif 1 comprend un ensemble d'un ou plusieurs processeurs 3, parfois appelé unités centrales de traitement ou CPU pour « Central Processing Units ». L'ensemble de processeur(s) 3 comprend au moins une unité de commande 5 et au moins une unité de traitement 7, ou PU 7 pour « Processing Unit ». Chaque PU 7 comprend un ou plusieurs organes de calcul appelés unités arithmétiques et logiques 9, ou ALU 9 pour « Arithmetic-Logic Unit ». Dans l'exemple décrit ici, chaque PU 7 comprend en outre un jeu de registres 11. Le dispositif 1 comprend au moins une mémoire 13 apte à interagir avec l'ensemble de processeur(s) 3. À cet effet, le dispositif 1 comprend en outre une interface mémoire 15, ou « Bus ».

Dans le présent contexte, il est considéré que les organes mémoires sont mono-port, c'est-à-dire que les opérations de lecture et d'écriture sont mis en œuvre au cours de cycles différents, par opposition aux mémoires dites « double-port » (plus coûteuses en terme de surface et nécessitant des bus de commande dédoublés plus larges pour l'écriture et la lecture). En variante, les solutions techniques proposées peuvent être mises en œuvre avec des mémoires dites « double-port ». Dans de tels modes de réalisation, des lectures et écritures peuvent être mises en œuvre au cours d'un même cycle de calcul.

En figure 1, trois PU 7 sont représentées : PU 1, PU X et PU N. Seule la structure de PU X est représentée en détail afin de simplifier la figure 1. Néanmoins, les structures des PUs sont analogues les unes aux autres. Dans des variantes, le nombre de PUs est différent. Le dispositif 1 peut comprendre une unique PU, deux PUs ou plus de trois PUs.

Dans l'exemple décrit ici, la PU X comprend quatre ALUs : ALU X.0, ALU X.1, ALU X.2 et ALU X.3. Dans des variantes, les PUs peuvent comprendre un nombre d'ALUs différent les unes des autres et/ou différent de quatre, y compris une unique ALU. Chaque PU comprend un jeu de registres 11, ici au moins un registre 11 attribué à chaque ALU. Dans l'exemple décrit ici, la PU X comprend un unique registre 11 par ALU, soit quatre registres référencés REG X.0, REG X.1, REG X.2 et REG X.3 et attribués respectivement à ALU X.0, ALU X.1, ALU X.2 et ALU X.3. Dans des variantes, chaque ALU se voit attribué une pluralité de registres 11.

Chaque registre 11 est apte à alimenter en données de type opérande les entrées desdites ALUs 9 et est apte à être alimenté en données issues des sorties desdites ALU 9. Chaque registre 11 est, en outre, apte à stocker des données issues de la mémoire 13 obtenues par l'intermédiaire du bus 15 par une opération dite de « lecture ». Chaque registre 11 est, en outre, apte à transmettre des données stockées, à destination de la mémoire 13 et par l'intermédiaire du bus 15, par une opération dite d' « écriture ». Les opérations de lecture et d'écriture sont gérées par le pilotage des accès mémoire depuis l'unité de commande 5.

L'unité de commande 5 impose à chaque ALU 9 la manière d'effectuer des calculs élémentaires, notamment leur ordre, et attribut à chaque ALU 9 les opérations à exécuter. Dans l'exemple décrit ici, l'unité de commande 5 est configurée pour piloter les ALUs 9 selon une microarchitecture en chaine de traitement de sorte que les ALUs 9 effectuent des calculs en parallèle les unes des autres. Par exemple, le dispositif 1 présente une architecture à Unique flux d'instructions et multiple flux de données, dites SIMD pour « Single Instructions Multiple Data », et/ou une architecture à multiples flux d'instructions et multiples flux de données, dites MIMD pour « Multiple Instructions Multiple Data ». D'autre part, l'unité de commande 5 est en outre agencée pour piloter les accès mémoire par l'intermédiaire de l'interface mémoire 15 et notamment, ici, les opérations de lecture et d'écriture. Les deux types de pilotage (calcul et accès mémoire) sont représentés, en figure 1, par des flèches en traits discontinus.

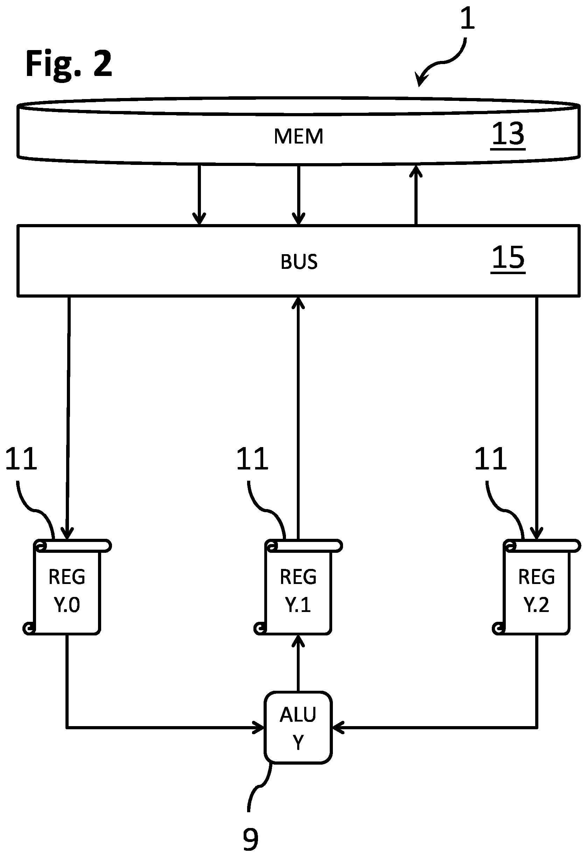

Il est maintenant fait référence à la figure 2, sur laquelle une unique ALU Y est représentée. Les transmissions de données sont représentées par des flèches à traits pleins. La transmission des données étant réalisée de proche en proche, on comprend que la figure 2 ne représente pas nécessairement un instant t avec des transmissions de données simultanées. Au contraire, pour qu'une donnée soit transmise d'un registre 11 vers une ALU 9, il est par exemple nécessaire que ladite donnée soit préalablement transmise audit registre 11 depuis la mémoire 13, ici via l'interface mémoire 15 (ou Bus).

Dans l'exemple de la figure 2, trois registres 11, référencés respectivement REG Y.0, REG Y.1 et REG Y.2, sont attribués une ALU référencée ALU Y. Chaque ALU 9 présente au moins trois ports, à savoir deux entrées et une sortie. Pour chaque opération, au moins deux opérandes sont reçus, respectivement par la première et la seconde entrée. Le résultat du calcul est émis via la sortie. Dans l'exemple représenté en figure 2, les opérandes reçus en entrée proviennent respectivement du registre REG Y.0 et du registre REG Y.2. Le résultat du calcul est inscrit au registre REG Y.1. Une fois inscrite au registre REG Y.1, le résultat (sous forme d'une donnée) est écrite en mémoire 13, via l'interface mémoire 15. Dans des variantes, au moins une ALU peut présenter plus de deux entrées et recevoir plus de deux opérandes pour un calcul.

Chaque ALU 9 peut effectuer :
- des opérations arithmétiques sur des données entières (addition, soustraction, multiplication, division, etc.) ;
- des opérations arithmétiques sur des données flottantes (addition, soustraction, multiplication, division, inversion, racine carrée, logarithmes, trigonométrie, etc.) ;
- des opérations logiques (compléments à deux, « ET », « OU », « OU exclusif », etc.).

Les ALUs 9 n'échangent pas directement de données entre elles. Par exemple, si le résultat d'un premier calcul effectué par une première ALU constitue un opérande pour un deuxième calcul à effectuer par une deuxième ALU, alors le résultat du premier calcul doit au moins être inscrit dans un registre 11 avant d'être utilisable par une ALU 9.

Dans des modes de réalisation, les données inscrites sur un registre 11 sont en outre systématiquement écrites en mémoire 13 (via l'interface mémoire 15), même si ladite donnée est obtenue seulement pour servir d'opérande et pas en tant que résultat d'un processus de traitement dans son ensemble.

Dans des modes de réalisation, les données obtenues pour servir d'opérande et ayant une pertinence courte (résultat intermédiaire sans intérêt à l'issu du traitement dans son ensemble) ne sont pas systématiquement écrites en mémoire 13 et peuvent être stockées seulement de manière temporaire sur un registre 11. Par exemple, si le résultat d'un premier calcul effectué par une première ALU constitue un opérande pour un deuxième calcul à effectuer par une deuxième ALU, alors le résultat du premier calcul doit être inscrit dans un registre 11. Puis, ladite donnée est transmise à la deuxième ALU en tant qu'opérande directement depuis le registre 11. On comprend alors que l'attribution d'un registre 11 à une ALU 9 peut évoluer au fil du temps et notamment d'un cycle de calcul à un autre. Cette attribution peut notamment prendre la forme de données d'adressage qui permettent de localiser, à chaque instant, l'emplacement d'une donnée, que ce soit sur un registre 11 ou en un emplacement de la mémoire 15.

Dans la suite, le fonctionnement du dispositif 1 est décrit pour un traitement appliqué à des données informatiques, le traitement étant composé d'un ensemble d'opérations, dont des calculs effectués en parallèle par une pluralité d'ALUs 9 au cours d'une période de temps constituée d'une séquence de cycles de calcul. On dit alors que les ALUs 9 fonctionnent selon une microarchitecture en chaine de traitement. Néanmoins, le traitement mis en œuvre par le dispositif 1 et dont il est question ici peut, lui-même, constituer une partie (ou un sous-ensemble) d'un processus informatique plus global. Un tel processus plus global peut comprendre, dans d'autres parties ou sous-ensembles, des calculs effectués de manière non parallèle par une pluralité d'ALUs, par exemple selon un fonctionnement en série, ou en cascade.

Les architectures de fonctionnement (parallèle ou en série) peuvent être constantes ou dynamiques, par exemple imposées (pilotées) par l'unité de commande 5. Les variations d'architecture peuvent par exemple être fonction des données à traiter et des instructions courantes reçues en entrée du dispositif 1. Une telle adaptation dynamique des architectures peut être mise en œuvre dès le stade de la compilation, en adaptant les instructions machines générées par le compilateur en fonction du type de données à traiter et des instructions lorsque le type de données à traiter et les instructions peuvent être déduites du code source. Une telle adaptation peut aussi être mise en œuvre seulement au niveau du dispositif 1, ou d'un processeur, lorsqu'il exécute un code machine classique et qu'il est programmé pour mettre en œuvre un ensemble d'instructions de configuration fonction des données à traiter et des instructions courantes reçues.

L'interface de mémoire 15, ou « bus », transmet et route les données entre les ALU 9 et la mémoire 15, dans les deux sens. L'interface de mémoire 15 est pilotée par l'unité de commande 5. Ainsi, l'unité de commande 5 pilote l'accès à la mémoire 13 du dispositif 1 par l'intermédiaire de l'interface mémoire 15.

L'unité de commande 5 pilote de manière coordonnée les opérations (calculs) mises en œuvre par les ALU 9 et les accès mémoire. Le pilotage de l'unité de commande 5 comprend la mise en œuvre d'une succession d'opérations décomposées en cycles de calcul. Le pilotage comprend la génération d'un premier cycle i et d'un deuxième cycle ii. Chronologiquement, le premier cycle i est antérieur au deuxième cycle ii. Comme cela sera décrit plus en détails dans les exemples ci-après, le deuxième cycle ii peut être immédiatement ultérieur au premier cycle i, ou bien le premier cycle i et le deuxième cycle ii peuvent être chronologiquement espacés l'un de l'autre, par exemple avec des cycles intermédiaires.

Le premier cycle i comprend :
- la mise en œuvre d'un premier calcul par au moins une ALU 9 ; et
- le téléchargement, depuis la mémoire 13 sur au moins un registre 11, d'un premier jeu de données.

Le deuxième cycle ii comprend la mise en œuvre d'un deuxième calcul par au moins une ALU 9. Le deuxième calcul peut être mis en œuvre par la même ALU 9 que le premier calcul ou par une ALU 9 distincte. Une partie au moins du premier jeu de données téléchargé au cours du premier cycle i forme un opérande pour le deuxième calcul.

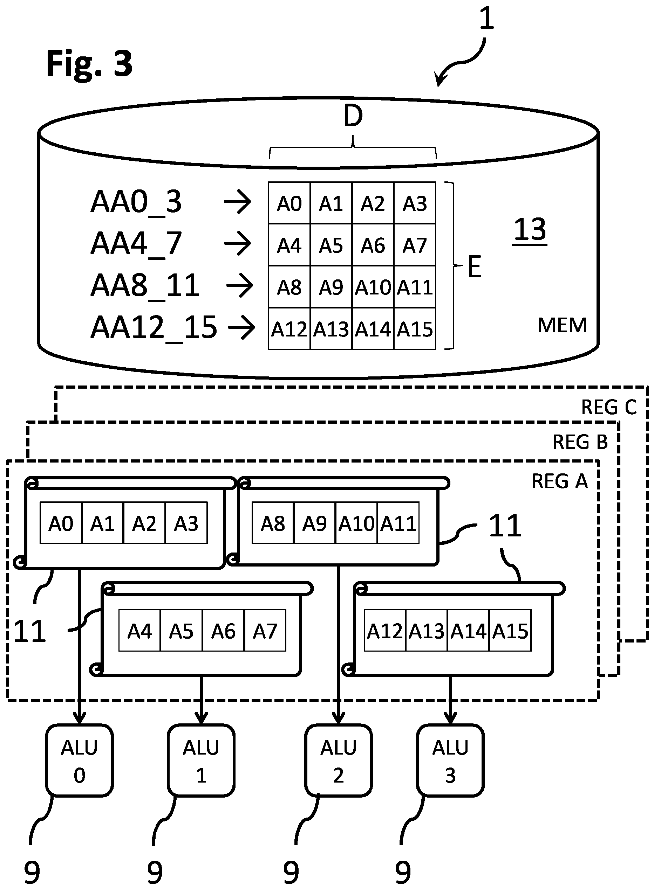

Il est maintenant fait référence à la figure 3. Des données, ou blocs de données, sont référencées respectivement A0 à A15 et sont stockées dans la mémoire 13. Dans l'exemple, il est considéré que les données A0 à A15 sont regroupées par quatre de la manière suivante :
- un jeu de données référencé AA0_3 constitué des données A0, A1, A2 et A3 ;
- un jeu de données référencé AA4_7 constitué des données A4, A5, A6 et A7 ;
- un jeu de données référencé AA8_11 constitué des données A8, A9, A10 et A11 ; et
- un jeu de données référencé AA12_15 constitué des données A12, A13, A14 et A15.

En variante, les données peuvent être regroupées différemment, notamment par groupe (ou « bloc », ou « slot ») de deux, trois ou plus de quatre. Un jeu de données peut être vu comme un groupe de données accessibles sur la mémoire 13 par l'intermédiaire d'un unique port de l'interface mémoire 15 au cours d'une unique opération de lecture. De même, les données d'un jeu de données peuvent être inscrites en mémoire 13 par l'intermédiaire d'un unique port de l'interface mémoire 15 au cours d'une unique opération d'écriture.

Ainsi, au cours d'un premier cycle i, au moins un jeu de données AA0_3, AA4_7, AA8_11 et/ou AA12_15 est téléchargé sur au moins un registre 11. Dans l'exemple de la figure, chacun des jeux de données AA0_3, AA4_7, AA8_11 et/ou AA12_15 est téléchargé sur un registre 11 respectif, soit quatre registres 11 distincts les uns des autres. Chacun des registres 11 est attribué au moins temporairement à une ALU 9 respective, ici référencée respectivement ALU 0, ALU 1 ALU 2 et ALU 3. Au cours de ce même cycle i, les ALUs 9 peuvent avoir mis en œuvre un calcul.

Au cours d'un deuxième cycle ii, chaque ALU 9 met en œuvre un calcul pour lequel l'une au moins des données stockées sur le registre 11 correspondant forme un opérande. Par exemple, l'ALU 0 met en œuvre un calcul dont l'un des opérandes est A0. A1, A2 et A3 peuvent être inutilisés au cours du deuxième cycle ii.

De manière générale, télécharger des données depuis la mémoire 13 jusqu'à un registre 11 est moins consommateur de temps de calcul que de mettre en œuvre des calculs par des ALUs 9. Ainsi, on peut généralement considérer qu'une opération d'accès mémoire (ici une lecture) consomme un unique cycle de calcul, tandis que la mise en œuvre d'un calcul par une ALU 9 consomme un cycle de calcul ou une succession de plusieurs cycles de calcul, par exemple quatre.

Dans l'exemple de la figure 3, il existe une pluralité de registres 11 attribués à chaque ALU 9, représentés par des groupe de registres 11 référencés REG A, REG B et REG C. Les données téléchargées depuis la mémoire 13 sur les registres 11 correspondent aux groupes REG A et REG B. Le groupe REG C est ici destiné à stocker des données obtenues par des calculs mis en œuvre par les ALUs 9 (au cours d'une opération d'écriture).

Les registres 11 des groupes REG B et REG C peuvent ainsi contenir des jeux de données référencés de manière analogues à ceux de REG A :
- le groupe REG B comprend quatre registres 11 sur lesquels sont respectivement stockés un jeu de données BB0_3 constitué de données B0 à B3, un jeu de données BB4_7 constitué de données B4 à B7, un jeu de données BB8_11 constitué de données B8 à B11 et un jeu de données BB12_15 constitué de données B12 à B15 ;
- le groupe REG C comprend quatre registres 11 sur lesquels sont respectivement stockés un jeu de données CC0_3 constitué de données C0 à C3, un jeu de données CC4_7 constitué de données C4 à C7, un jeu de données CC8_11 constitué de données C8 à C11 et un jeu de données CC12_15 constitué de données C12 à C15.

Dans l'exemple de la figure 3, les données AN et BN constituent les opérandes d'un calcul mis en œuvre par une ALU 9 tandis que la donnée CN constitue le résultat, avec « N » un entier compris entre 0 et 15. Par exemple, dans le cas d'une addition, CN = AN + BN. Dans un tel exemple, le traitement des données mis en œuvre par le dispositif 1 correspond à 16 opérations. Les 16 opérations sont indépendantes les unes des autres au sens qu'aucun des résultats des 16 opérations n'est nécessaire pour mettre en œuvre l'une des 15 autres opérations.

La mise en œuvre du traitement (les 16 opérations) peut donc, par exemple, se décomposer de la manière suivante, en 18 cycles.

### Exemple 1 :

- cycle #0 : lecture de AA0_3 ;
- cycle #1 : lecture de BB0_3 ;
- cycle #2 : calcul de C0 (du jeu CC0_3) et lecture de AA4_7 (formant par exemple un cycle i) ;
- cycle #3 : calcul de C1 (du jeu CC0_3) et lecture de BB4_7 (formant par exemple un cycle i) ;
- cycle #4 : calcul de C2 (du jeu CC0_3) ;
- cycle #5 : calcul de C3 (du jeu CC0_3) et écriture de CC0_3 ;
- cycle #6 : calcul de C4 (du jeu CC4_7) et lecture de AA8_11 (formant par exemple un cycle ii) ;
- cycle #7 : calcul de C5 (du jeu CC4_7) et lecture de BB8_11 (formant par exemple un cycle ii) ;
- cycle #8 : calcul de C6 (du jeu CC4_7) (formant par exemple un cycle ii);
- cycle #9 : calcul de C7 (du jeu CC4_7) et écriture de CC4_7 (formant par exemple un cycle ii) ;
- cycle #10 : calcul de C8 (du jeu CC8_11) et lecture de AA12_15 ;
- cycle #11 : calcul de C9 (du jeu CC8_11) et lecture de BB12_15 ;
- cycle #12 : calcul de C10 (du jeu CC8_11) ;
- cycle #13 : calcul de C11 (du jeu CC8_11) et écriture de CC8_11 ;
- cycle #14 : calcul de C12 (du jeu CC12_15) ;
- cycle #15 : calcul de C13 (du jeu CC12_15) ;
- cycle #16 : calcul de C14 (du jeu CC12_15) ;
- cycle #17 : calcul de C15 (du jeu CC12_15) et écriture de CC12_15.

On comprend alors que, à l'exception des cycles #0 et #1 initiaux, les accès mémoire (lectures et écritures) sont mis en œuvre en parallèle des calculs, sans consommer de cycle de calcul supplémentaire. Lire des jeux de (plusieurs) données, ou blocs de données, plutôt que de lire une unique donnée, permet de terminer l'importation des données depuis la mémoire 13 sur les registres avant mêmes que lesdites données ne deviennent nécessaires, en tant qu'opérande, pour un calcul.

Dans l'exemple du cycle #2 ci-dessus, si seule la donnée immédiatement nécessaire (A0) avait été lue plutôt que de lire le jeu AA0_3 = {A0 ; A1 ; A2 ; A3}, alors il aurait été nécessaire de mettre en œuvre, ultérieurement, trois opérations de lecture supplémentaires pour obtenir A1, A2 et A3.

Pour mieux comprendre, et par comparaison, on reproduit ci-après la mise en œuvre d'un traitement dans lequel une unique donnée est lue à chaque fois plutôt qu'un jeu de (plusieurs) données. On constate que 48 cycles sont nécessaires.

### Exemple 0 :

- cycle #0 : lecture de A0 ;
- cycle #1 : lecture de B0 ;
- cycle #2 : calcul de C0 et écriture de C0 ;
- cycle #3 : lecture de A1 ;
- cycle #4 : lecture de B1 ;
- cycle #5 : calcul de C1 écriture de C1 ;
- ...
- cycle #45 : lecture de A15 ;
- cycle #46 : lecture de B15 ;
- cycle #47 : calcul de C15 et écriture de C15.

Dans l'exemple 1 (18 cycles), on remarque que les deux premiers cycles #0 et #1 constituent des cycles d'initialisation. Le nombre I de cycles d'initialisation correspond au nombre d'opérandes par calcul. Ensuite un motif de quatre cycles successifs est répété quatre fois. Par exemple, les cycles #2 à #5 forment ensemble un motif. Le nombre de cycles par motif correspond au nombre D de données par jeu de données tandis que le nombre de motifs correspond au nombre E de jeu de données à traiter. Le nombre total de cycles peut donc s'exprimer de la manière suivante : I + D*E.

Atteindre une bonne performance équivaut à réduire au minimum le nombre total de cycles. Dans les conditions considérées, c'est-à-dire 16 opérations élémentaires et indépendantes pouvant être chacune mise en œuvre sur un cycle, le nombre de cycles optimum semblent donc être égal à celui nombre d'opérations élémentaires (16) auquel s'ajoute la phase d'initialisation (2 cycles), soit un total de 18 cycles.

Dans une variante, on considère que le nombre de données accessibles (en lecture ou en écriture) en un unique cycle (le nombre D de données par jeu de données) est égal à trois (et non plus quatre), par exemple à cause de limitations matérielles. Alors, la succession des cycles peut, par exemple, être décomposée de la manière suivante :
- une phase d'initialisation de 2 cycles ; puis
- 5 motifs de 3 cycles pour un total de 15 calculs élémentaires sur les 16 à effectuer ; puis
- un ultime cycle pour calculer et enregistrer le résultat du dernier calcul élémentaire.

### Exemple 2 :

- cycle #0 : lecture de AA0_2={A0 ; A1 ; A2} ;
- cycle #1 : lecture de BB0_2={B0 ; B1 ; B2} ;
- cycle #2 : calcul de C0 (du jeu CC0_2={C0 ; C1 ; C2}) et lecture de AA3_5 (formant par exemple un cycle i) ;
- cycle #3 : calcul de C1 (du jeu CC0_2) et lecture de BB3_5 (formant par exemple un cycle i) ;
- cycle #4 : calcul de C2 (du jeu CC0_2) et écriture de CC0_2 ;
- cycle #5 : calcul de C3 (du jeu CC3_5) et lecture de AA6_8 (formant par exemple un cycle ii) ;
- cycle #6 : calcul de C4 (du jeu CC3_5) et lecture de BB6_8 (formant par exemple un cycle ii) ;
- cycle #7 : calcul de C5 (du jeu CC3_5) et écriture de CC3_5 (formant par exemple un cycle ii) ;
- cycle #8 : calcul de C6 (du jeu CC6_8) et lecture de AA9_11 ;
- cycle #9 : calcul de C7 (du jeu CC6_8) et lecture de BB9_11 ;
- cycle #10 : calcul de C8 (du jeu CC6_8) et écriture de CC6_8 ;
- cycle #11 : calcul de C9 (du jeu CC9_11) et lecture de AA12_14 ;
- cycle #12 : calcul de C10 (du jeu CC9_11) et lecture de BB12_14 ;
- cycle #13 : calcul de C11 (du jeu CC9_11) et écriture de CC9_11 ;
- cycle #14 : calcul de C12 (du jeu CC12_14) et lecture de A15 (formant par exemple un cycle i) ;
- cycle #15 : calcul de C13 (du jeu CC12_14) et lecture de B15 (formant par exemple un cycle i) ;
- cycle #16 : calcul de C14 (du jeu CC12_14) et écriture de CC12_14 ;
- cycle #17 : calcul de C15 (donnée isolée) et écriture de C15 (formant par exemple un cycle ii).

Dans l'exemple 2, on constate que chaque cycle inclut une opération d'accès mémoire (en lecture ou en écriture). On comprend donc que, si le nombre D de données accessibles en un unique cycle est strictement inférieur à trois, alors des cycles supplémentaires seront nécessaires pour effectuer des accès mémoire. L'optimum de 18 cycles pour 16 opérations élémentaires ne sera donc plus atteint. Pour autant, même si l'optimum n'est pas atteint, le nombre de cycles reste significativement inférieur au nombre de cycles nécessaire dans l'exemple 0. Un mode de réalisation dans lequel les jeux de données comprennent deux données présentent une amélioration par rapport à l'existant.

Dans l'exemple 1, si les cycles #2 et/ou #3 correspondent par exemple à un cycle i tel que défini ci-avant, alors chacun des cycles #6, #7, #8 et #9 correspond à un cycle ii. Bien entendu, cela est transposable de motif en motif. Dans l'exemple 2, si les cycles #2 et/ou #3 correspondent par exemple à un cycle i tel que défini ci-avant, alors chacun des cycles #5, #6 et #7 correspond à un cycle ii. Bien entendu, cela est transposable de motif en motif.

Dans les exemples décrits jusqu'ici, notamment les exemples 1 et 2, le faible nombre total de cycles est atteint notamment parce qu'un maximum d'opérations d'accès mémoire est mis en œuvre par jeu de (plusieurs) données plutôt qu'à l'unité et en parallèle d'opérations de calculs. Ainsi, pour certaines parties du processus (pour toutes les parties dans les exemples optimisés), la lecture de l'ensemble des opérandes nécessaires peut être achevée avant même que l'opération de calcul élémentaire précédente ne soit terminée. De préférence, il est préservé de la puissance de calcul pour effectuer un calcul et enregistrer (opération d'écriture) le résultat dudit calcul en un cycle de calcul commun (cycle #5 de l'exemple 1 par exemple).

Dans les exemples, la lecture des données-opérandes en avance est mise en œuvre tout au long du processus (répété d'un motif à l'autre). Les opérandes nécessaires aux calculs effectués au cours d'un motif sont systématiquement obtenus (lus) au cours du motif chronologiquement antérieur. On notera que, dans des modes de réalisation dégradés, la lecture en avance est mise en œuvre seulement partiellement (pour deux motifs successifs seulement). Un tel mode dégradé par rapport aux exemples ci-avant présente de meilleurs résultats que les méthodes existantes.

Dans les exemples décrits jusqu'ici, il a été admis que les données étaient lues avant de servir d'opérandes. Dans des modes de réalisation, les données lues en avance le sont aléatoirement, ou du moins indépendamment des calculs à réaliser dans le futur. Ainsi, certaines au moins des données lues en avance parmi les jeux de données correspondent effectivement à des opérandes pour des calculs ultérieurs tandis que d'autres données lues ne sont pas des opérandes pour des calculs ultérieurs. Par exemple, certaines au moins des données lues peuvent être ultérieurement effacées des registres 11 sans avoir été utilisées par les ALUs 9, typiquement écrasées par d'autres données enregistrées ultérieurement sur les registres 11. Certaines données sont donc lues inutilement (et enregistrées inutilement sur les registres 11). Néanmoins, il suffit que certaines au moins des données parmi les jeux de données lues soient effectivement des opérandes pour qu'une économie en cycle de calcul se produise, et donc que la situation soit améliorée par rapport à l'existant. Aussi, en fonction du nombre de données à traiter et du nombre de cycles, il est probable (au sens mathématique du terme), que certaines au moins des données pré-lues puissent effectivement être utilisées en tant qu'opérande dans un calcul effectué par une ALU 9 dans un cycle suivant.

Dans des modes de réalisation, les données lues en avance sont présélectionnées, et dépendent des calculs à réaliser. Cela permet d'améliorer la pertinence des données pré-lues. En effet, dans les exemples à 16 calculs élémentaires ci-avant, chacun des 16 calculs élémentaires nécessite en entrée une paire d'opérandes, respectivement A0 et B0 ; A1 et B1 ; ... ; A15 et B15. Si les données sont lues aléatoirement, alors les deux premiers cycles pourraient correspondre à la lecture de AA0_3 et BB4_7. Dans un tel cas, aucune paire complète d'opérande n'est disponible sur les registres 11 à l'issue des deux premiers cycles. Par conséquent, les ALUs 9 ne peuvent mettre en œuvre aucun calcul élémentaire au cycle suivant. Un ou plusieurs cycles supplémentaires seraient donc nécessairement consommés pour de l'accès mémoire avant que les calculs élémentaires ne puissent débuter, ce qui augmente le nombre total de cycles et est donc nuisible pour l'efficacité.

Compter sur le hasard et les probabilités pour que les données obtenues en lecture soient les plus pertinentes possibles suffit à améliorer l'existant mais n'est pas pleinement satisfaisant. La situation peut encore être améliorée.

La mise en œuvre d'un algorithme de prélecture (ou « prefetch algorithm ») permet d'obtenir, dès que possible, tous les opérandes du prochain calcul à effectuer. Dans l'exemple ci-avant, lire AA0_3 et BB0_3 au cours des deux premiers cycles permet, par exemple, de rendre disponibles, sur les registres 11, l'ensemble des opérandes nécessaires à la mise en œuvre de 4 premiers calculs élémentaires.

Un tel algorithme reçoit en paramètres d'entrée des données d'informations relatives aux calculs à réaliser ultérieurement par les ALUs 9, et en particulier relatives aux opérandes nécessaires. Un tel algorithme permet, en sortie, de sélectionner les données lues (par jeu) en prévision des calculs futurs à effectuer. Un tel algorithme est, par exemple, mis en œuvre par l'unité de commande 5 lors du pilotage des accès mémoire.

Selon une première approche, l'algorithme impose une organisation des données dès leur enregistrement dans la mémoire 13. Par exemple, les données que l'on souhaite voir former ensemble un jeu de données sont juxtaposées et/ou ordonnancées de sorte que l'ensemble du jeu de données peut être appelé par une requête unique. Par exemple, si les adresses des données A0, A1, A2 et A3 sont référencées respectivement @A0 @A1, @A2, @A3, alors l'interface mémoire 15 peut être configurée pour, en réponse à une requête de lecture sur @A0, lire en outre automatiquement les données aux trois adresses suivantes @A1, @A2 et @A3.

Selon une deuxième approche, l'algorithme de prélecture fourni en sortie des requêtes en accès mémoire adaptées en fonction des calculs à réaliser ultérieurement par les ALUs 9, et en particulier relatives aux opérandes nécessaires. Dans les exemples précédents, l'algorithme identifie par exemple que les données à lire en priorité sont celles de AA0_3 et BB0_3 pour rendre possible, dès le cycle suivant, les calculs élémentaires ayant pour résultat CC0_3, soit le calcul de C0 avec les opérandes A0 et B0, le calcul de C1 avec les opérandes A1 et B1, le calcul de C2 avec les opérandes A2 et B2 et le calcul de C3 avec les opérandes A3 et B3. L'algorithme fournit donc, en sortie, des requêtes d'accès mémoire construites pour générer la lecture de AA0_3 et BB0_3.

Les deux approches peuvent, optionnellement, être combinées l'une avec l'autre : l'algorithme identifie les données à lire et l'unité de commande 5 en déduit des requêtes d'accès mémoire à l'interface mémoire 15 pour obtenir lesdites données, les requêtes étant adaptées en fonction des caractéristiques (structure et protocole) de l'interface mémoire 15.

Dans les exemples précédents, notamment les exemples 1 et 2 ci-avant, le nombre d'ALUs affectées aux calculs élémentaires n'est pas défini. Une unique ALU 9 peut effectuer l'ensemble des calculs élémentaires, cycle par cycle. Les calculs élémentaires à effectuer peuvent aussi être répartis sur une pluralité d'ALUs 9 d'une PU, par exemple quatre. Dans de tels cas, coordonner la répartition des calculs sur les ALUs avec la manière de regrouper les données à lire à chaque opération de lecture peut permettre d'améliorer encore l'efficacité. Deux approches se distinguent.

Dans une première approche, les données lues en une opération forment opérandes dans des calculs mis en œuvre par une seule et même ALU 9. Par exemple, les groupes AA0_3 et BB0_3 de données A0, A1, A2, A3, B0, B1, B2 et B3 sont lus les premiers et une première ALU est chargée du calcul de CC0_3 (C0, C1, C2 et C3). Les groupes AA4_7 (A4, A5, A6, A7) et BB4_7 (B4, B5, B6 et B7) sont lus ensuite et une seconde ALU est chargée du calcul de CC4_7 (C4, C5, C6 et C7). On comprend alors que la première ALU va pouvoir commencer à mettre en œuvre les calculs avant que la seconde ALU puisse faire de même car les opérandes nécessaires aux calculs de la première ALU seront disponibles sur les registres 11 avant que les opérandes nécessaires aux calculs de la seconde ALU ne le soient. Les ALUs 9 d'une PU fonctionnent alors de manière parallèle et asynchrone.

Dans une deuxième approche, les données lues en une opération forment opérandes dans des calculs chacun mis en œuvre par différentes ALUs 9, par exemple quatre. Par exemple, deux groupes de données incluant respectivement A0, A4, A8 et A12 ; B0, B4, B8 et B12 sont lus les premiers. Une première ALU est chargée du calcul de C0, une seconde ALU est chargée du calcul de C4, une troisième ALU est chargée du calcul de C8 et une quatrième ALU est chargée du calcul de C12. On comprend alors que les quatre ALUs vont pouvoir commencer à mettre en œuvre leur calcul respectif de manière sensiblement simultanée, car les opérandes nécessaires seront disponibles sur les registres 11 en même temps car téléchargés en une opération commune. Les ALUs 9 d'une PU fonctionnent de manière parallèle et synchronisées. En fonction, des types de calculs à effectuer, de l'accessibilité des données en mémoire et des ressources disponibles, l'une ou l'autre des deux approches peut être préférée. Les deux approches peuvent également être combinées : les ALUs peuvent être organisés en sous-groupes, les ALUs d'un sous-groupe fonctionnant de manière synchronisées et les sous-groupes fonctionnant de manière asynchrone les uns par rapport aux autres.

Pour imposer un fonctionnant synchronisé, asynchrone ou mixte des ALUs, le regroupement des données à lire par opération de lecture doit être sélectionné en correspondance avec la répartition des affectations des opérations de calcul à diverses ALUs.

Dans les exemples précédents, les calculs élémentaires sont indépendants les uns des autres. L'ordre dans lequel ils sont effectués n'a donc *a priori* pas d'importance. Dans des applications pour lesquels certains au moins des calculs sont dépendants les uns des autres, l'ordonnancement des calculs peut être spécifique. Une telle situation se présente typiquement dans le contexte de calculs récursifs. Dans de tels cas, l'algorithme peut être configuré pour identifier les données à acquérir (lire) en priorité. Par exemple, si :
- le résultat C1 est obtenu par un calcul dont l'un des opérandes est C0, C0 étant lui-même obtenu à partir des opérandes A0 et B0,
- le résultat C5 est obtenu par un calcul dont l'un des opérandes est C4, C4 étant lui-même obtenu à partir des opérandes A4 et B4,
- le résultat C9 est obtenu par un calcul dont l'un des opérandes est C8, C8 étant lui-même obtenu à partir des opérandes A8 et B8, et
- le résultat C13 est obtenu par un calcul dont l'un des opérandes est C12, C12 étant lui-même obtenu à partir des opérandes A12 et B12,
alors l'algorithme peut être configuré pour lire, lors des deux premiers cycles #0 et #1 d'initialisation, les jeux de données définis comme suit :
- {A0 ; A4 ; A8 ; A12}, et
- {B0 ; B4 ; B8 ; B12}.

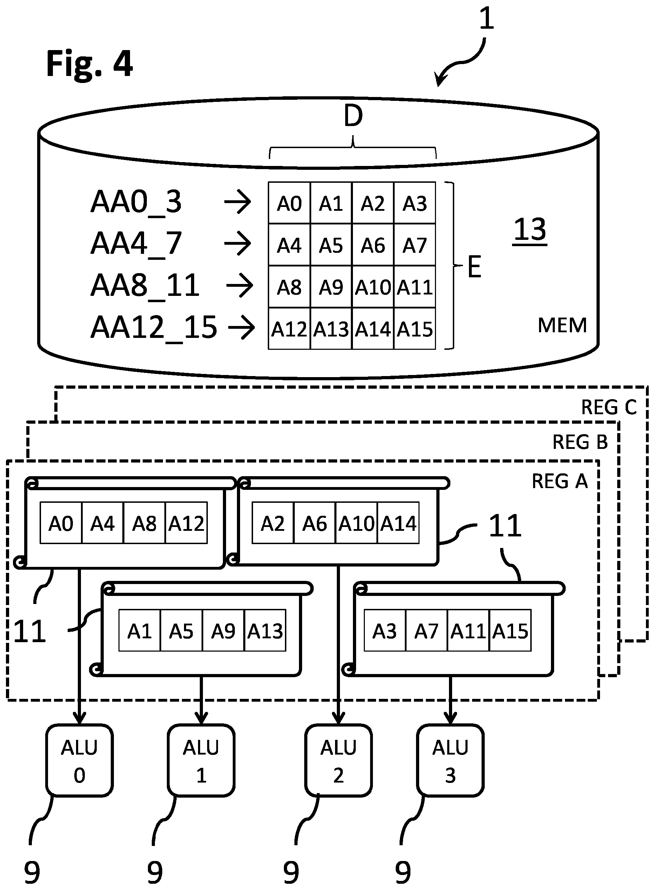

Le jeu de données ainsi défini est représenté en figure 4. De manière imagée, on peut dire que les données sont regroupées « en ligne » dans le mode de réalisation représenté en figure 3 et regroupées « en colonne » dans le mode de réalisation représenté en figure 4. Ainsi, la mise en œuvre de l'algorithme permet de lire et de rendre disponibles sur les registres 11, les opérandes utiles pour les calculs élémentaires prioritaires. Autrement dit, la mise en œuvre de l'algorithme permet d'augmenter la pertinence à court terme des données lues par rapport à une lecture aléatoire.

L'invention ne se limite pas aux exemples d'unités de traitement et de procédés décrits ci-avant, seulement à titre d'exemple, mais elle englobe toutes les variantes que pourra envisager l'homme de l'art dans le cadre de la protection recherchée définie dans les revendications ci-jointes, auxquelles il convient de se référer.

## Revendications

1. Dispositif (1) informatique comprenant :
- une pluralité d'unités arithmétiques et logiques (9) ;
- un jeu de registres (11) aptes à alimenter en données de type opérande les entrées desdites unités arithmétiques et logiques (9) et aptes être alimentés en données issues des sorties desdites unités arithmétiques et logiques (9) ;
- une mémoire (13) ;
- une interface mémoire (15) par l'intermédiaire de laquelle des données (A0, A15) sont transmises et routées entre les registres (11) et la mémoire (13) ;
- une unité de commande (5) configurée pour piloter les unités arithmétiques et logiques (9) selon une microarchitecture en chaine de traitement de sorte que les unités arithmétiques et logiques (9) effectuent des calculs en parallèle les unes des autres, **caractérisé en ce que** l'unité de commande (5) est en outre agencée pour piloter les accès mémoire par l'intermédiaire de l'interface mémoire (15), lesdits pilotages générant :
- au moins un cycle i incluant à la fois la mise en œuvre en parallèle d'au moins un premier calcul par une unité arithmétique et logique (9) et le téléchargement, depuis la mémoire (13) sur au moins un registre (11), d'un premier jeu de données (AA4_7 ; BB4_7), au moins une partie (A4 ; B4) de ce premier jeu de données (AA4_7 ; BB4_7) n'étant utilisée par aucun calcul des unités arithmétiques et logiques (9) pendant ce cycle i ;
- au moins un cycle ii, ultérieur à l'au moins un cycle i, incluant la mise en œuvre d'un deuxième calcul par une unité arithmétique et logique (9), deuxième calcul pour lequel cette partie (A4 ; B4) au moins du premier jeu de données (AA4_7 ; BB4_7) forme au moins un opérande.

2. Dispositif selon la revendication 1, dans lequel l'unité de commande (5) est en outre configurée pour, préalablement au pilotage des unités arithmétiques et des accès mémoire, mettre en œuvre un algorithme d'identification du premier jeu de données (AA4_7 ; BB4_7) à télécharger au cours de l'au moins un cycle i en fonction du deuxième calcul à mettre en œuvre au cours de l'au moins un cycle ii.

3. Dispositif selon l'une des revendications précédentes, dans lequel l'unité de commande (5) est configurée pour mettre en œuvre deux cycles i distincts l'un de l'autre de sorte que deux premiers jeux de données (AA4_7, BB4_7) distincts l'un de l'autre sont téléchargés sur au moins un registre (11), une partie (A4, B4) au moins de chacun des deux premiers jeux de données (AA4_7, BB4_7) formant un opérande du deuxième calcul de l'au moins un cycle ii.

4. Dispositif selon l'une des revendications précédentes, dans lequel l'unité de commande (5) est configurée pour mettre en œuvre une pluralité de cycles ii distincts les uns des autres, et de sorte que la partie (A4 ; A5 ; A6 ; A7) du premier jeu de données (AA4_7) formant au moins un opérande du deuxième calcul d'un cycle ii soit différente d'un cycle ii à un autre cycle ii de la pluralité.

5. Dispositif selon l'une des revendications précédentes, dans lequel l'unité de commande (5) est configurée pour effectuer au moins deux itérations d'une série d'au moins un cycle i, et un cycle ii, lesdites deux itérations étant au moins en partie superposées de sorte qu'au moins un cycle ii de la première itération constitue un cycle i de l'itération suivante.

6. Dispositif selon l'une des revendications précédentes, dans lequel l'unité de commande (5) est configurée pour faire précéder un premier cycle i d'une phase d'initialisation incluant le téléchargement, depuis la mémoire (13) sur au moins un registre (11), d'au moins un jeu de données (AA0_3 ; BB0_3) formant opérandes pour le premier calcul dudit premier cycle i.

7. Dispositif selon l'une des revendications précédentes, dans lequel l'unité de commande (5) est en outre agencée pour piloter les accès mémoire par l'intermédiaire de l'interface mémoire (15) de sorte que lesdits pilotages génèrent :
- au cours d'un cycle i, la mise en œuvre d'une pluralité de premiers calculs par une pluralité d'unités arithmétiques et logiques (9) ;
- au cours d'un cycle ii, la mise en œuvre d'une pluralité de deuxièmes calculs par une pluralité d'unités arithmétiques et logiques (9),
le regroupement des données par jeu de données à télécharger étant sélectionné en correspondance avec une répartition des affectations des opérations de calcul à chacune des unités arithmétiques et logiques (9) de la pluralité de sorte que lesdites unités arithmétiques et logiques (9) présentent un fonctionnent de manière synchronisée, asynchrone ou mixte.

8. Procédé de traitement de données mis en œuvre par une unité de commande (5) d'un dispositif (1) informatique, ledit dispositif (1) comprenant :
- une pluralité d'unités arithmétiques et logiques (9) ;
- un jeu de registres (11) aptes à alimenter en données de type opérande les entrées desdites unités arithmétiques et logiques (9) et aptes être alimentés en données issues des sorties desdites unités arithmétiques et logiques (9) ;
- une mémoire (13) ;
- une interface mémoire (15) par l'intermédiaire de laquelle des données (A0, A15) sont transmises et routées entre les registres (11) et la mémoire (13) ;
- l'unité de commande (5) configurée pour piloter les unités arithmétiques et logiques (9) selon une microarchitecture en chaine de traitement de sorte que les unités arithmétiques et logiques (9) effectuent des calculs en parallèle les unes des autres, **caractérisé en ce que** l'unité de commande (5) est en outre agencée pour piloter les accès mémoire par l'intermédiaire de l'interface mémoire (15) ; ledit procédé comprenant au moins :
- générer un cycle i incluant à la fois la mise en œuvre en parallèle d'au moins un premier calcul par une unité arithmétique et logique (9) et le téléchargement, depuis la mémoire (13) sur au moins un registre (11), d'un premier jeu de données (AA4_7 ; BB4_7), au moins une partie (A4 ; B4) de ce premier jeu de données (AA4_7 ; BB4_7) n'étant utilisée par aucun calcul des unités arithmétiques et logiques (9) pendant ce cycle i ;
- générer un cycle ii, ultérieur au cycle i, incluant la mise en œuvre d'un deuxième calcul par une unité arithmétique et logique (9), deuxième calcul pour lequel cette partie (A4 ; B4) au moins du premier jeu de données (AA4_7 ; BB4_7) forme au moins un opérande.

9. Programme informatique comportant des instructions pour la mise en œuvre du procédé selon la revendication 8 lorsque ce programme est exécuté par un dispositif informatique selon la revendication 1.

10. Support d'enregistrement non transitoire lisible par un ordinateur sur lequel est enregistré un programme pour la mise en œuvre du procédé selon la revendication 8 lorsque ce programme est exécuté par un dispositif informatique selon la revendication 1.

## Patentansprüche

1. Rechneranordnung (1), umfassend:
- eine Mehrzahl von arithmetischen und logischen Einheiten (9);
- einen Satz von Registern (11), die dazu geeignet sind, die Eingänge der arithmetischen und logischen Einheiten (9) mit Daten vom Typ Operand zu versorgen, und die dazu geeignet sind, mit Daten aus den Ausgängen der arithmetischen und logischen Einheiten (9) versorgt werden zu können;
- einen Speicher (13);
- eine Speicherschnittstelle (15), über die Daten (A0, A15) zwischen den Registern (11) und dem Speicher (13) übertragen und weitergeleitet werden;
- eine Steuereinheit (5), die dazu ausgebildet ist, die arithmetischen und logischen Einheiten (9) gemäß einer Verarbeitungsketten-Mikroarchitektur so zu steuern, dass die arithmetischen und logischen Einheiten (9) Berechnungen parallel zueinander ausführen, **dadurch gekennzeichnet, dass** die Steuereinheit (5) ferner dazu angeordnet ist, die Speicherzugriffe über die Speicherschnittstelle (15) zu steuern, wobei diese Steuerungen Folgendes erzeugen:
- wenigstens einen Zyklus i, der sowohl die parallele Ausführung wenigstens einer ersten Berechnung durch eine arithmetische und logische Einheit (9) als auch das Herunterladen eines ersten Datensatzes (AA4_7; BB4_7) aus dem Speicher (13) in wenigstens ein Register (11) umfasst, wobei wenigstens ein Teil (A4; B4) dieses ersten Datensatzes (AA4_7; BB4_7) von keiner arithmetischen und logischen Einheit (9) während dieses Zyklus i verwendet wird;
- wenigstens einen Zyklus ii, der auf den wenigstens einen Zyklus i folgt und die Durchführung einer zweiten Berechnung durch eine arithmetische und logische Einheit (9) umfasst, wobei für diese der Teil (A4; B4) wenigstens des ersten Datensatzes (AA4_7; BB4_7) wenigstens einen Operanden bildet.

2. Vorrichtung nach Anspruch 1, wobei die Steuereinheit (5) ferner dazu ausgebildet ist, vor der Steuerung der arithmetischen Einheiten und der Speicherzugriffe einen Algorithmus zur Identifizierung des ersten Datensatzes (AA4_7; BB4_7) zu identifizieren, der während des wenigstens einen Zyklus i in Abhängigkeit von der während des wenigstens einen Zyklus ii auszuführenden zweiten Berechnung herunterzuladen ist.

3. Vorrichtung nach einem der vorhergehenden Ansprüche, wobei die Steuereinheit (5) dazu ausgebildet ist, zwei voneinander getrennte Zyklen i so auszuführen, dass zwei voneinander getrennte erste Datensätze (AA4_7, BB4_7) auf wenigstens ein Register (11) heruntergeladen werden, wobei wenigstens ein Teil (A4, B4) jedes der beiden ersten Datensätze (AA4_7, BB4_7) einen Operanden der zweiten Berechnung des wenigstens einen Zyklus ii bildet.

4. Vorrichtung nach einem der vorhergehenden Ansprüche, wobei die Steuereinheit (5) dazu ausgebildet ist, mehrere voneinander unterschiedliche Zyklen ii auszuführen, und so, dass der Teil (A4; A5; A6; A7) des ersten Datensatzes (AA4_7), de wenigstens einen Operanden der zweiten Berechnung eines Zyklus ii bildet, von einem Zyklus ii zu einem anderen Zyklus ii der Mehrzahl unterschiedlich ist.

5. Vorrichtung nach einem der vorhergehenden Ansprüche, wobei die Steuereinheit (5) dazu ausgebildet ist, wenigstens zwei Iterationen einer Reihe von wenigstens einem Zyklus i und einem Zyklus ii auszuführen, wobei die beiden Iterationen wenigstens teilweise überlagert sind, so dass wenigstens ein Zyklus ii der ersten Iteration einen Zyklus i der folgenden Iteration bildet.

6. Vorrichtung nach einem der vorhergehenden Ansprüche, wobei die Steuereinheit (5) dazu ausgebildet ist, einem ersten Zyklus i eine Initialisierungsphase voranzustellen, die das Herunterladen wenigstens eines Datensatzes aus dem Speicher (13) in wenigstens ein Register (11) umfasst, wobei wenigstens ein Datensatz (AA0_3; BB0_3) die Operanden für die erste Berechnung des ersten Zyklus i bildet.

7. Vorrichtung nach einem der vorhergehenden Ansprüche, wobei die Steuereinheit (5) ferner dazu angeordnet ist, die Speicherzugriffe über die Speicherschnittstelle (15) so zu steuern, dass diese Steuerungen Folgendes erzeugen:
- während eines Zyklus i die Durchführung einer Mehrzahl von ersten Berechnungen durch eine Mehrzahl von arithmetischen und logischen Einheiten (9);
- während eines Zyklus ii die Durchführung einer Mehrzahl von zweiten Berechnungen durch eine Mehrzahl von arithmetischen und logischen Einheiten (9),
wobei die Gruppierung der Daten nach herunterzuladenden Datensätzen entsprechend einer Verteilung der Zuweisungen der Rechenoperationen an jede der arithmetischen und logischen Einheiten (9) der Mehrzahl ausgewählt wird, so dass die arithmetischen und logischen Einheiten (9) synchron, asynchron oder gemischt arbeiten.

8. Datenverarbeitungsverfahren, das von einer Steuereinheit (5) einer Rechenvorrichtung (1) ausgeführt wird, wobei die Vorrichtung (1) umfasst:
- eine Mehrzahl arithmetischer und logischer Einheiten (9);
- einen Satz von Registern (11), die dazu geeignet sind, die Eingänge der genannten arithmetischen und logischen Einheiten (9) mit Daten vom Typ Operand zu versorgen und mit Daten aus den Ausgängen der genannten arithmetischen und logischen Einheiten (9) versorgt zu werden;
- einen Speicher (13);
- eine Speicherschnittstelle (15), über die Daten (A0, A 15) zwischen den Registern (11) und dem Speicher (13) übertragen und weitergeleitet werden;
- die Steuereinheit (5), die dazu ausgebildet ist, die arithmetischen und logischen Einheiten (9) gemäß einer Verarbeitungsketten-Mikroarchitektur so zu steuern, dass die arithmetischen und logischen Einheiten (9) parallel zueinander Berechnungen durchführen, **dadurch gekennzeichnet, dass** die Steuereinheit (5) ferner dazu ausgebildet ist, die Speicherzugriffe über die Speicherschnittstelle (15) zu steuern; wobei das Verfahren wenigstens umfasst:
- Erzeugen eines Zyklus i, der sowohl die parallele Ausführung wenigstens einer ersten Berechnung durch eine arithmetische und logische Einheit (9) als auch das Herunterladen eines ersten Datensatzes (AA4_7; BB4_7) in wenigstens ein Register (11) umfasst, wobei wenigstens ein Teil (A4; B4) dieses ersten Datensatzes (AA4_7; BB4_7) während dieses Zyklus i von keiner der arithmetischen und logischen Einheiten (9) verwendet wird;
- Erzeugen eines Zyklus ii, der auf den Zyklus i folgt und die Durchführung einer zweiten Berechnung durch eine arithmetische und logische Einheit (9) umfasst, wobei für diese der Teil (A4; B4) wenigstens des ersten Datensatzes (AA4_7; BB4_7) wenigstens einen Operanden bildet.

9. Computerprogramm mit Anweisungen zur Durchführung des Verfahrens nach Anspruch 8, wenn dieses Programm von einer Computervorrichtung nach Anspruch 1 ausgeführt wird.

10. Nichttransitorischer, computerlesbarer Träger, auf dem ein Programm zur Durchführung des Verfahrens nach Anspruch 8 gespeichert ist, wenn dieses Programm von einer Computervorrichtung nach Anspruch 1 ausgeführt wird.

## Claims

1. A computing device (1) comprising:
- a plurality of arithmetic logic units (9);
- a set of registers (11) able to supply data of operand type to the inputs of said arithmetic logic units (9) and able to be supplied with data from the outputs of said arithmetic logic units (9);
- a memory (13);
- a memory interface (15) by way of which data (A0, A15) are transmitted and routed between the registers (11) and the memory (13);
- a control unit (5) configured so as to control the arithmetic logic units (9) in accordance with a processing chain microarchitecture such that the arithmetic logic units (9) perform computing operations in parallel with one another, **characterized in that** the control unit (5) furthermore is designed to control the memory access operations by way of the memory interface (15), said control operations generating:
- at least one cycle i including both implementing in parallel at least one first computing operation by way of an arithmetic logic unit (9) and downloading a first dataset (AA4_7; BB4_7) from the memory (13) to at least one register (11), at least part of this first dataset (AA4_7; BB4_7) not being used by any computing operation by way of the arithmetic logic units (9) during this cycle i;
- at least one cycle ii, following the at least one cycle i, including implementing a second computing operation by way of an arithmetic logic unit (9), for which second computing operation at least this part (A4; B4) of the first dataset (AA4_7; BB4_7) forms at least one operand.

2. The device as claimed in claim 1, wherein the control unit (5) is furthermore configured, prior to controlling the arithmetic units and the memory access operations, so as to implement an identification algorithm for identifying the first dataset (AA4_7; BB4_7) to be downloaded during the at least one cycle i on the basis of the second computing operation to be implemented during the at least one cycle ii.

3. The device as claimed in either of the preceding claims, wherein the control unit (5) is configured so as to implement two cycles i separate from one another, such that two first datasets (AA4_7, BB4_7) separate from one another are downloaded to at least one register (11), at least part (A4, B4) of each of the two first datasets (AA4_7, BB4_7) forming an operand for the second computing operation of the at least one cycle ii.

4. The device as claimed in one of the preceding claims, wherein the control unit (5) is configured so as to implement a plurality of cycles ii separate from one another, and such that the part (A4; A5; A6; A7) of the first dataset (AA4_7) forming at least one operand for the second computing operation of a cycle ii is different from one cycle ii to another cycle ii of the plurality.

5. The device as claimed in one of the preceding claims, wherein the control unit (5) is configured so as to perform at least two iterations of a series of at least one cycle i, and one cycle ii, said two iterations being at least partly superimposed such that at least one cycle ii of the first iteration forms a cycle i of the following iteration.

6. The device as claimed in one of the preceding claims, wherein the control unit (5) is configured so as to precede a first cycle i with an initialization phase including downloading, from the memory (13) to at least one register (11), at least one dataset (AA0_3; BB0_3) forming operands for the first computing operation of said first cycle i.

7. The device as claimed in one of the preceding claims, wherein the control unit (5) is furthermore designed to control the memory access operations by way of the memory interface (15), such that said control operations generate:
- during a cycle i, the implementation of a plurality of first computing operations by a plurality of arithmetic logic units (9);
- during a cycle ii, the implementation of a plurality of second computing operations by a plurality of arithmetic logic units (9),
the grouping of the data per dataset to be downloaded being selected so as to match a distribution of the assignments of the computing operations to each of the arithmetic logic units (9) of the plurality, such that said arithmetic logic units (9) have synchronized, asynchronous or mixed operation.

8. A data processing method implemented by a control unit (5) of a computing device (1), said device (1) comprising:
- a plurality of arithmetic logic units (9);
- a set of registers (11) able to supply data of operand type to the inputs of said arithmetic logic units (9) and able to be supplied with data from the outputs of said arithmetic logic units (9);
- a memory (13);
- a memory interface (15) by way of which data (A0, A15) are transmitted and routed between the registers (11) and the memory (13);
- the control unit (5) configured so as to control the arithmetic logic units (9) in accordance with a processing chain microarchitecture such that the arithmetic logic units (9) perform computing operations in parallel with one another, **characterized in that** the control unit (5) furthermore is designed to control the memory access operations by way of the memory interface (15); said method comprising at least:
- generating a cycle i including both implementing at least one first computing operation by way of an arithmetic logic unit (9) and downloading a first dataset (AA4_7; BB4_7) from the memory (13) to at least one register (11);
- generating a cycle ii, following the cycle i, including implementing a second computing operation by way of an arithmetic logic unit (9), for which second computing operation at least part (A4; B4) of the first dataset (AA4_7; BB4_7) forms at least one operand.

9. A computer program comprising instructions for implementing the method as claimed in claim 8 when this program is executed by a computer device according to claim 1.

10. A non-transient computer-readable recording medium on which there is recorded a program for implementing the method as claimed in claim 8 when this program is executed by a computer device according to claim 1.
